# EUROPEAN PATENT APPLICATION

(11) **EP 3 267 297 A1**
(43) Date of publication of application: **10.01.2018**
(21) Application number: 17179831.7
(22) Date of filing: 05.07.2017
(51) Int. Cl.: G06F 3/042

(54) **POSITIONING PROGRAM, COMPUTER APPARATUS, POSITIONING METHOD, AND POSITIONING SYSTEM**

(30) Priority: 08.07.2016 JP 2016135717
(71) Applicant: Square Enix Co., Ltd., Tokyo 160-8430 (JP)
(72) Inventor: SANO, Kazunao, Tokyo, Tokyo 160-8430 (JP)
(74) Representative: Pitchford, James Edward

(57) **Abstract**

A positioning program executed by a computer apparatus in a positioning system comprising: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; and the computer apparatus, wherein the projection screen is installed so that a part of the image projected onto the projection screen is outside angle of view of the camera, and the positioning program causes the computer apparatus to function as a locator that, in a case where a detection target object is caused to pass through the invisible ray screen, locate a passage position of the detection target object on the invisible ray screen, based on the reflected light of invisible rays detected by the camera.

## Description

### CROSS REFERENCE TO RELATED APPLICATION

The present disclosure relates to subject matter contained in Japanese Patent Application No. 2016-135717, filed on July 8, 2016, the disclosure of which is expressly incorporated herein by reference in its entirety.

### BACKGROUND OF THE INVENTION

### FIELD OF THE INVENTION

The present invention relates to a positioning program, a computer apparatus, a positioning method, and a positioning system.

### DESCRIPTION OF RELATED ART

In the related art, a method is known in which a light-reflected position is located by imaging reflected light of infrared rays. In particular, a position detection system is known which detects a position through which a ball passes by forming a mesh-shaped infrared ray network installed so as to cover a display for displaying a picture and by imaging the infrared ray reflected on the ball passing through the infrared ray network (for example, refer to JP-A-2007-29478).

### SUMMARY OF THE INVENTION

### TECHNICAL PROBLEM

According to the position detection system disclosed in JP-A-2007-29478, an infrared screen needs to be large enough to cover a real screen in order to enable position detection of a detection target object in an entire range of the real screen. That is, in a case where the real screen is large, it is necessary to form the infrared screen having a size approximately equal to or larger than a size of the real screen.

If an angle of view of a camera for imaging the reflected light is widened so as to match the size of the infrared screen, in an end side region away from the center within a range which can be imaged by the camera, misalignment occurs between a position detected by imaging the reflected light and a position of the actually detection target object. Consequently, it is necessary to perform a correction process on the detected position.

An object of at least one embodiment according to the present invention is to provide a positioning program, a computer apparatus, a positioning method, and a positioning system which can accurately locate a position of a detection target object even in a case of using a large projection screen.

### SOLUTION TO PROBLEM

According to a non-limiting aspect, a positioning program executed by a computer apparatus in a positioning system including: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; and the computer apparatus, wherein the projection screen is installed so that a part of the image projected onto the projection screen is outside angle of view of the camera, and the positioning program causes the computer apparatus to function as a locator that, in a case where a detection target object is caused to pass through the invisible ray screen, locate a passage position of the detection target object on the invisible ray screen, based on the reflected light of invisible rays detected by the camera.

According to a non-limiting aspect, a computer apparatus is a computer apparatus in a positioning system including: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; and the computer apparatus, wherein the projection screen is installed so that a part of the image projected onto the projection screen is outside angle of view of the camera, and the computer apparatus comprises a locator that locates, in a case where a detection target object is caused to pass through the invisible ray screen, a passage position of the detection target object on the invisible ray screen, based on the reflected light of invisible rays detected by the camera.

According to a non-limiting aspect, a positioning method is a positioning method executed by a computer apparatus in a positioning system including: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; and the computer apparatus, wherein the projection screen is installed so that a part of the image projected onto the projection screen is outside angle of view of the camera, and the positioning method comprises a step of positioning, in a case where a detection target object is caused to pass through the invisible ray screen, a passage position of the detection target object on the invisible ray screen, based on the reflected light of invisible rays detected by the camera.

According to a non-limiting aspect, a positioning system is a positioning system including: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; a computer apparatus; a projector that projects the image onto the projection screen; a reflected light detector that causes the camera to detect the reflected light of invisible rays in a case where the detection target object is caused to pass through the invisible ray screen; and a locator that locates a passage position of the detection target object on the invisible ray screen, based on the reflected light of the detected invisible rays, wherein the projection screen is installed so that a part of the image projected onto the projection screen by the projector is outside angle of view of the camera.

According to a non-limiting aspect, a positioning method executed by a positioning system including: an invisible ray screen formed by invisible rays; a projection screen disposed in the vicinity of the invisible ray screen along the invisible ray screen; a projector device that projects an image onto the projection screen; a camera that detects reflected light of the invisible ray by imaging the invisible ray screen; and a computer apparatus, the positioning method comprising: a step of projecting the image onto the projection screen; a step of causing the camera to detect the reflected light of invisible rays in a case where the detection target object is caused to pass through the invisible ray screen; and a step of positioning a passage position of the detection target object on the invisible ray screen, based on the reflected light of the detected invisible rays, wherein the projection screen is installed so that a part of the image projected onto the projection screen by the projector is outside angle of view of the camera.

### ADVANTAGEOUS EFFECTS OF INVENTION

One or more of the above problems can be solved with each embodiment of the present invention.

### BRIEF DESCRIPTION OF THE DRAWINGS

Fig. 1 is a block diagram illustrating a configuration of a computer apparatus, which corresponds to at least one embodiment according to the present invention.
Fig. 2 is a flowchart of a program executing process, which corresponds to at least one embodiment according to the present invention.
Fig. 3 is a block diagram illustrating a configuration of a computer apparatus, which corresponds to at least one embodiment according to the present invention.
Fig. 4 is a flowchart of a program executing process, which corresponds to at least one embodiment according to the present invention.
Fig. 5 is a block diagram illustrating a configuration of a computer apparatus, which corresponds to at least one embodiment according to the present invention.
Fig. 6 is a flowchart of a program executing process, which corresponds to at least one embodiment according to the present invention.
Fig. 7 is a block diagram illustrating a configuration of a system, which corresponds to at least one embodiment according to the present invention.
Fig. 8 is a flowchart of a program executing process, which corresponds to at least one embodiment according to the present invention.
Fig. 9 is a block diagram illustrating a configuration of a system, which corresponds to at least one embodiment according to the present invention.
Figs. 10A to 10C are views for describing the invisible ray screens, which corresponds to at least one embodiment according to the present invention.
Fig. 11 is a block diagram illustrating the configuration of a computer apparatus, which corresponds to at least one embodiment according to the present invention.
Figs. 12A and 12B are block diagrams illustrating a state where the image is projected on the projection screen from the projector device, which corresponds to at least one embodiment according to the present invention.
Fig. 13 is a view illustrating an example of a program executing screen, which corresponds to at least one embodiment according to the present invention.
Fig. 14 is a flowchart of a program executing process, which corresponds to at least one embodiment according to the present invention.
Fig. 15 is a view illustrating a benefit giving data table associated with the position of the object, which corresponds to at least one embodiment according to the present invention.

### DESCRIPTION OF EMBODIMENTS

Hereinafter, embodiments of the invention will be described with reference to the accompanying drawings. Hereinafter, description relating to effects shows an aspect of the effects of the embodiments of the invention, and does not limit the effects. Further, the order of respective processes that form a flowchart described below may be changed in a range without contradicting or creating discord with the processing contents thereof.

### First Embodiment

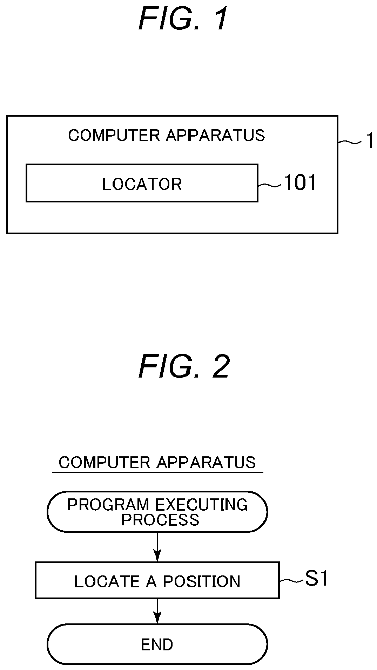

Next, a first embodiment according to the present invention will be briefly described. Fig. 1 is a block diagram illustrating a configuration of a computer apparatus, which corresponds to at least one embodiment according to the present invention. A computer apparatus 1 includes at least a locator 101.

The locator 101 has a function to locate a passage position of a detection target object on an invisible ray screen, based on reflected light of invisible rays detected by a camera in a case where the detection target object is caused to pass through the invisible ray screen.

A program executing process according to the first embodiment of the present invention will be described. Fig. 2 is a flowchart of a program executing process, which corresponds to at least one embodiment according to the present invention.

The computer apparatus 1 locates the passage position of the detection target object on the invisible ray screen, based on the reflected light of the invisible rays detected by the camera, in a case where the detection target object is caused to pass through the invisible ray screen, (Step S1), and completes the program executing process.

According to the first embodiment, a positioning system including the computer apparatus includes the invisible ray screen formed by invisible rays, a projection screen disposed in the vicinity of the invisible ray screen along the invisible ray screen, a projector device which projects an image onto the projection screen, a camera which detects the reflected light of invisible rays by imaging the invisible ray screen, and the computer apparatus.

According to the first embodiment, the projection screen is installed so that a part of an image projected onto the projection screen is outside angle of view of the camera.

According to an aspect of the first embodiment, the projection screen is installed so that a part of the image projected onto the projection screen is out of the angle of view of the camera. Accordingly, even in a case of using a large projection screen, it is possible to accurately locate the position of the detection target object.

According to the first embodiment, the "invisible ray" means, for example, a ray which cannot be perceived by a human eye. The "invisible ray screen" means, for example, a plane formed by the invisible rays. The "projection screen" means, for example, a screen for a projector, onto which a picture can be projected.

The "image" includes, for example, a figure, a photograph, an image, or a graphics and the like, and may include either a still image or a moving image. The "projector device" means such as a projector, and means those which can project the picture and the like.

The "camera" means, for example, a device capable of imaging such as a video camera and an infrared sensor camera. The "computer apparatus" means, for example, a desktop or laptop personal computer, a tablet computer, a PDA and the lide, and may include a portable information terminal device whose display screen is provided with a touch panel sensor.

The "reflected light" means such as light reflected after an emitted ray hits against the detection target object. The "angle of view" means, for example, a range which can be imaged by the camera. The "detection target object" means, for example an object to be detected by the camera.

### Second Embodiment

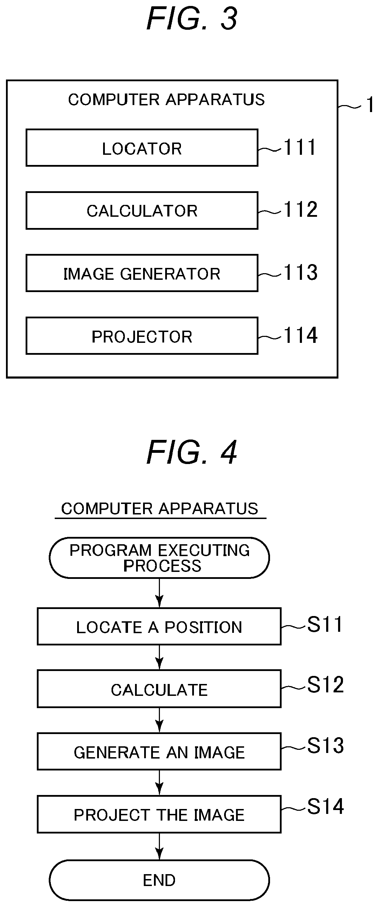

Next, a second embodiment according to the present invention will be briefly described. Fig. 3 is a block diagram illustrating a configuration of a computer apparatus, which corresponds to at least one embodiment according to the present invention. The computer apparatus 1 includes at least a locator 111, a calculator 112, an image generator 113, and a projector 114.

The locator 111 has a function to locate the passage position of the detection target object on the invisible ray screen, based on the reflected light of the invisible rays detected by the camera in a case where the detection target object is caused to pass through the invisible ray screen. The calculator 112 has a function to calculate a predetermined program by using the position located by the locator 111 as input data.

The image generator 113 has a function to generate an image in accordance with a calculation result calculated by the calculator 112. The projector 114 has a function to cause the projector device to project the image generated by the image generator 113 onto the projection screen.

A program executing process according to the second embodiment of the present invention will be described. Fig. 4 is a flowchart of the program executing process, which corresponds to at least one embodiment according to the present invention.

The computer apparatus 1 locates the passage position of the detection target object on the invisible ray screen, based on the reflected light of the invisible rays detected by the camera in a case where the detection target object is caused to pass through the invisible ray screen (Step S11). The computer apparatus 1 calculates the predetermined program by using the position located in Step S11 as the input data (Step S12).

The computer apparatus 1 generates the image in accordance with the calculation result calculated in Step S12 (Step S13). Then, the computer apparatus project the image generated in Step S13 onto the projection screen by the projector device (Step S14), and the program executing process is completed.

According to the second embodiment, the positioning system including the computer apparatus includes the invisible ray screen formed by the invisible rays, the projection screen disposed in the vicinity of the invisible ray screen along the invisible ray screen, the projector device which projects the image onto the projection screen, the camera which detects the reflected light of the invisible rays by imaging the invisible ray screen, and the computer apparatus.

According to an aspect of the second embodiment, calculation is performed by using the located passage position of the detection target object as the input data, and the image is generated in accordance with the calculation result. In this manner, a user can progressively execute a program after inputting data by using the detection target object.

According to the second embodiment, the "invisible ray", the "invisible ray screen", the "projection screen", the "image", the "projector device", the "camera", the "computer apparatus", the "reflected light", the "angle of view", and the "detection target object" are respectively the same as the contents described in the first embodiment.

In the second embodiment, the "calculation" means, for example, a calculation process, and includes comparison calculation, logic calculation and the like.

### Third Embodiment

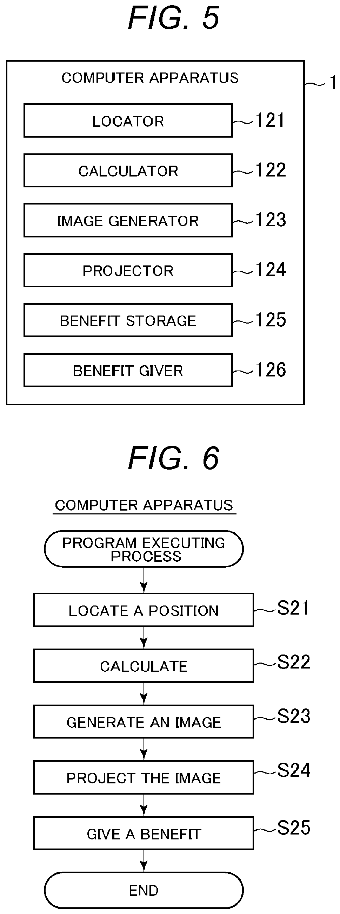

Next, a third embodiment according to the present invention will be briefly described. Fig. 5 is a block diagram illustrating a configuration of a computer apparatus, which corresponds to at least one embodiment according to the present invention. The computer apparatus 1 includes at least a locator 121, a calculator 122, an image generator 123, a projector 124, a benefit storage 125, and a benefit giver 126.

The locator 121 has a function to locate the passage position of the detection target object on the invisible ray screen, based on the reflected light of the invisible rays detected by the camera in a case where the detection target object is caused to pass through the invisible ray screen. The calculator 122 has a function to calculate the predetermined program by using the position located by the locator 121 as the input data.

The image generator 123 has a function to generate the image in accordance with the calculation result calculated by the calculator 122. The projector 124 has a function to cause the projector device to project the image generated by the image generator 123 onto the projection screen.

The benefit storage 125 has a function to store the information by associating a position on the invisible ray screen which corresponds to a position of the object on the projection screen with a benefit to be given to a user. The benefit giver 126 has a function to give the benefit to the user in accordance with the position located by the locator 121.

A program executing process according to the third embodiment of the present invention will be described. Fig. 6 is a flowchart of a program executing process, which corresponds to at least one embodiment according to the present invention.

The computer apparatus 1 locates the passage position of the detection target object on the invisible ray screen, based on the reflected light of the invisible rays detected by the camera in a case where the detection target object is caused to pass through the invisible ray screen (Step S21). The computer apparatus 1 calculates the predetermined program by using the position located in Step S21 as the input data (Step S22).

The computer generates the image in accordance with the calculation result calculated in Step S22 (Step S23). The image generated in Step S23 is projected onto the projection screen by the projector device (Step S24). Then, in accordance with the position located in Step S21, the benefit is given to the user (Step S25), and the program executing process is completed.

According to the third embodiment, the positioning system including a computer apparatus includes the invisible ray screen formed by the invisible rays, a projection screen disposed in the vicinity of the invisible ray screen along the invisible ray screen, a projector device which projects the image onto the projection screen, a camera which detects the reflected light of the invisible rays by imaging the invisible ray screen, and a computer apparatus.

According to an aspect of the third embodiment, the user can acquire the benefit at a position corresponding to the projected object by causing the invisible rays to be reflected on the detection target object. Accordingly, a user can fell more interests.

According to the third embodiment, the "invisible ray", the "invisible ray screen", the "projection screen", the "image", the "projector device", the "camera", the "computer apparatus", the "reflected light", the "angle of view", and the "detection target object" are respectively the same as the contents described in the first embodiment.

In the third embodiment, the "calculation" is the same as the content described in the second embodiment.

In the third embodiment, the "benefit", for example, may be those which can be advantageous to the user. For example, the "benefit" may include not only information, items, a virtual currency, and points which can be used in executing the program, but also those which can be used in the real world, such as goods and cards.

### Fourth Embodiment

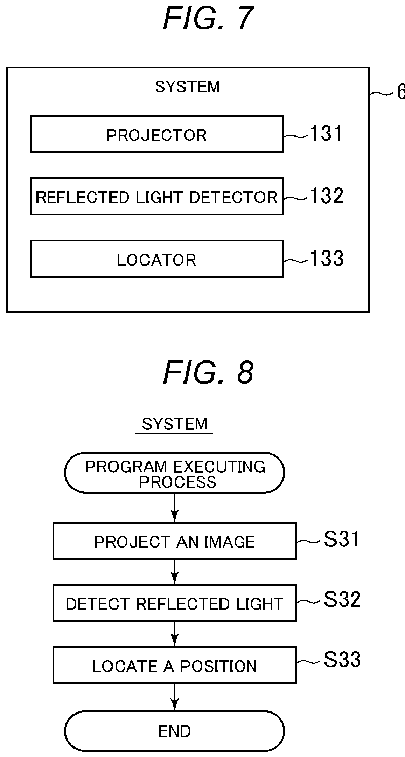

Next, a fourth embodiment according to the present invention will be briefly described. Fig. 7 is a block diagram illustrating a configuration of a system, which corresponds to at least one embodiment according to the present invention. A system 6 includes at least a projector 131, a reflected light detector 132, and a locator 133.

The projector 131 has a function to project the image onto the projection screen. The reflected light detector 132 has a function to detect the reflected light of the invisible rays detected by the camera in a case where the detection target object is caused to pass through the invisible ray screen. The locator 133 has a function to locate the passage position of the detection target object on the invisible ray screen, based on the reflected light of the detected invisible rays.

A program executing process according to the fourth embodiment of the present invention will be described. Fig. 8 is a flowchart of the program executing process, which corresponds to at least one embodiment according to the present invention.

First, the system 6 projects the image onto the projection screen (Step S31). Next, in a case where the detection target object is caused to pass through the invisible ray screen, the camera is caused to detect the reflected light of the invisible rays (Step S32).

Finally, the system 6 locates the passage position of the detection target object on the invisible ray screen, based on the reflected light of the detected invisible ray (Step S33), and the program executing process is completed.

According to the fourth embodiment, the positioning system includes an invisible ray screen formed by the invisible rays, a projection screen disposed in the vicinity of the invisible ray screen along the invisible ray screen, a projector device which projects the image onto the projection screen, a camera which detects the reflected light of the invisible rays by imaging the invisible ray screen, and a computer apparatus.

According to the fourth embodiment, the projection screen is installed so that a part of the image projected onto the projection screen by the projector 131 is out of the angle of view of the camera.

According to an aspect of the fourth embodiment, the projection screen is installed so that a part of the image projected onto the projection screen is out of the angle of view of the camera. Accordingly, even in a case of using a large projection screen, it is possible to accurately locate the position of the detection target object.

According to the fourth embodiment, the "invisible ray", the "invisible ray screen", the "projection screen", the "image", the "projector device", the "reflected light", the "camera", the "computer apparatus", the "detection target object", and the "angle of view" are respectively the same as the contents described in the first embodiment.

### Fifth Embodiment

Next, a fifth embodiment according to the present invention will be briefly described. An example of the fifth embodiment according to the present invention includes a system which locates a passage position by causing a detection target object such as a ball to pass through a screen formed by the infrared ray so as to execute a program to be proceeded by using located position information as input data of the program.

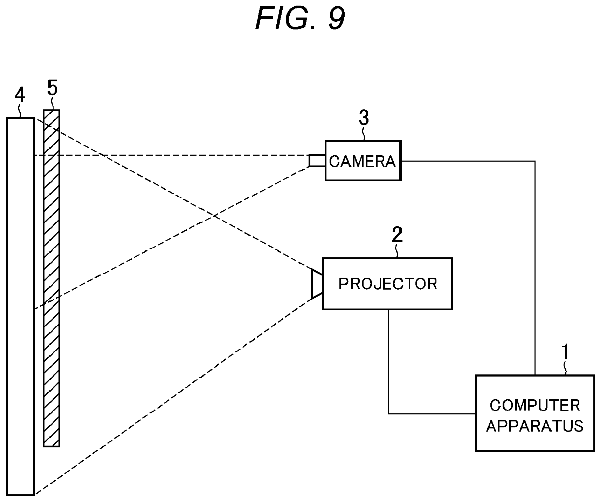

Fig. 9 is a block diagram illustrating a configuration of a system, which corresponds to at least one embodiment according to the present invention. As illustrated, the system is configured to include the computer apparatus 1, a projector device 2 which projects the image onto a projection screen 4, a camera 3 which images and detects the reflected light of the invisible rays, the projection screen 4 onto which the image is projected, and an invisible ray screen 5 formed by the invisible rays.

The computer apparatus 1 is connected to the projector device 2 and the camera 3 via a wired or wireless communication network. The projector device 2, the camera 3, and the computer apparatus 1 may be a mutually independent device, or may be a single composite device.

Any configuration may be adopted as long as the projector device 2 can project the image so as to be identifiable. The image may be projected in colors, or may be projected in black and white. The camera 3 may be configured to be capable of imaging not only the invisible rays such as the infrared ray or the ultraviolet ray but also the visible light.

It is preferable that the projection screen 4 is formed of a material which displays the image projected from the projector device 2. The invisible ray screen 5 may be formed in a mesh shape or a stripe shape by using the invisible rays. It is preferable that the invisible rays can be reflected on the detection target object passing through the invisible ray screen 5.

As illustrated, it is preferable that the projection screen 4 is disposed in the vicinity along the invisible ray screen 5. If a distance becomes shorter between the projection screen 4 and the invisible ray screen 5 having a role to locate the position of the detection target object passing therethrough, a difference becomes smaller between the position of the projected image and the located position. Accordingly, it is possible to obtain a sense that the detection target object fits into an object included in the projected image.

As an example of the fifth embodiment according to the present invention, the invisible ray screen 5 can be formed by infrared rays. An infrared sensor camera may be adapted as the camera, and in order to distinguish the infrared ray of the invisible ray screen 5 from other natural infrared rays, a filter may be attached to the camera 3. The reason is to cut a wavelength of approximately 9 to 10 µm corresponding to the infrared ray emitted from a human body. It is preferable that the wavelength of the infrared ray forming the invisible ray screen 5 is set so as not to be included in a range of the above-described wavelength to be cut.

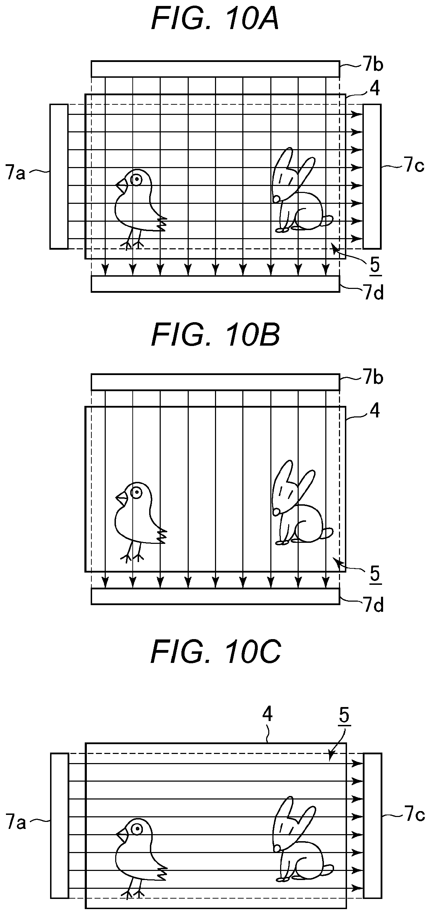

Next, the invisible ray screen according to the fifth embodiment of the present invention will be described. Figs. 10A to 10C are views for describing the invisible ray screens, which corresponds to at least one embodiment according to the present invention.

Fig. 10A is a view in which the invisible ray screen 5 having a mesh shape is formed by emitting the invisible rays forming the invisible ray screen in a vertical direction and a lateral direction in a case where the projection screen 4 is viewed from the front.

The invisible rays are emitted from invisible ray emitters 7 installed in the vertical direction and the lateral direction of the projection screen 4, thereby forming the invisible ray screen 5 (range surrounded by a dotted line in Fig. 10A). The invisible ray emitter 7 has a function to emit invisible rays.

In Fig. 10A, the invisible ray is indicated by a directed ray. The ray is emitted from the invisible ray emitter 7b on the upper side of the projection screen 4 to the invisible ray emitter 7d on the lower side, and is emitted from the invisible ray emitter 7a on the left side of the projection screen 4 to the invisible ray emitter 7c on the right side. The fifth embodiment according to the present invention is not limited thereto. That is, the invisible ray may be emitted from any one of the invisible ray emitters 7 as long as the invisible ray screen 5 is formed in a mesh shape.

In addition, the invisible ray emitters 7c and 7d installed on the right side and the lower side of the projection screen 4 may not be provided. The invisible ray screen 5 may be formed by only the invisible ray emitters 7a and 7b on the upper side and the left side.

Fig. 10B is a view in which the invisible rays forming the invisible ray screen are emitted from the invisible ray emitters 7 installed in the vertical direction so as to form the invisible ray screen 5 having a stripe shape in the vertical direction, in a case where the projection screen 4 is viewed from the front.

Furthermore, Fig. 10C is a view in which the invisible rays forming the invisible ray screen are emitted from the invisible ray emitters 7 installed in the lateral direction so as to form the invisible ray screen 5 having a stripe shape in the lateral direction, in a case where the projection screen 4 is viewed from the front.

As illustrated in Figs. 10A, 10B, and 10C, the invisible ray screen 5 may be formed in a mesh shape or in a stripe shape. In any case, it is desirable that a distance between the invisible rays forming the invisible ray screen 5 is narrower than the maximum width when the detection target object passes through the invisible ray screen.

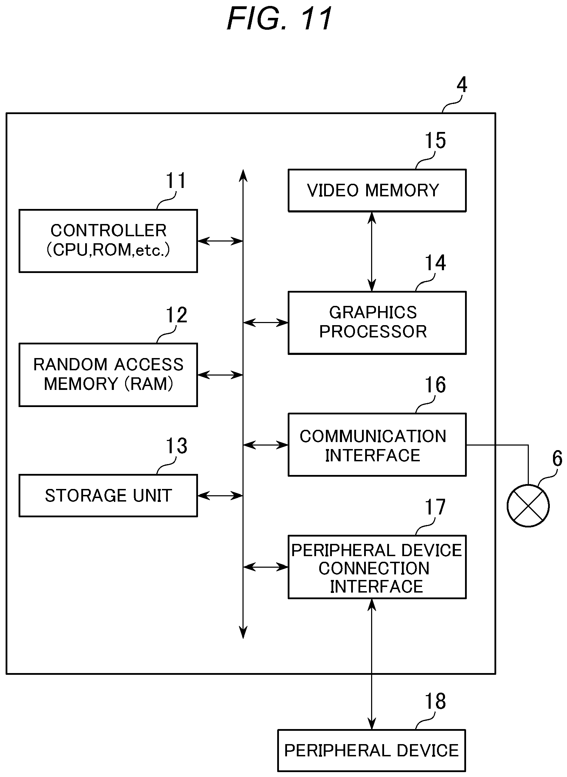

Next, a configuration of the computer apparatus according to the fifth embodiment of the present invention will be described. Fig. 11 is a block diagram illustrating the configuration of a computer apparatus, which corresponds to at least one embodiment according to the present invention.

The computer apparatus 1 includes a controller 11, a Random Access Memory (RAM) 12, a storage unit 13, a graphics processor 14, a video memory 15, a communication interface 16, a peripheral device connection interface 17, and a peripheral device 18. All of these are connected to each other by an internal bus.

The controller 11 is configured to include a Central Processing Unit (CPU) and a Read Only Memory (ROM). The controller 11 executes a program stored in the storage unit 13 so as to control the computer apparatus 1. The RAM 12 is a work area of the controller 11. The storage unit 13 is a storage area for storing a program and data.

The controller 11 performs processing by reading the program and data from the RAM 12. The controller 11 processes the program and data which are loaded to the RAM 12, thereby outputting a drawing command to the graphics processor 14.

The graphics processor 14 draws one image in the unit of frames. For example, one frame time for the image is 1/30 seconds. The graphics processor 14 has a function of receiving a part of a calculation process relating to the drawing performed only by the controller to disperse a load of the entire system. The graphics processor 14 performs drawing processing by using the video memory 15 as a storage area.

The communication interface 16 can be connected to the communication network 8 in a wireless or wired manner, and may receive data via the communication network 8. The data received via the communication interface 16 is loaded to the RAM 12, and is subjected to calculation processing by the controller 11.

The peripheral device 18 (for example, an SD card, an imaging camera and the like) is connected to the peripheral device connection interface 17. The data read from the peripheral device 18 is loaded to the RAM 12, and is subjected to calculation processing by the controller 11.

Next, a program executing process according to the fifth embodiment of the present invention will be described. An example of the fifth embodiment according to the present invention includes a game program which expresses a virtual world in such a way that a projector device is hung down from a ceiling so as to project an image onto a projection screen and a floor surface. The projection screen may be a wall surface.

Here, the projector device is installed so that an invisible ray screen overlaps a part of the projected image. A user can perform an input operation by throwing a detection target object such as a ball to the image projected onto the projection screen.

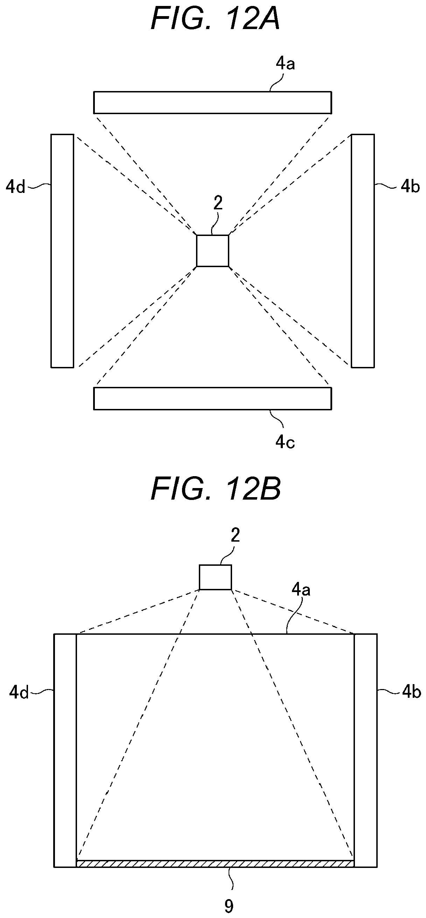

Figs. 12A and 12B are block diagrams illustrating a state where the image is projected on the projection screen from the projector device, which corresponds to at least one embodiment according to the present invention. Fig. 12A is a plan view illustrating a state where the image is projected onto the projection screen 4 from the projector device 2 in a front view of the projector device 2 viewed from the ceiling toward the floor surface.

Projection screens 4a to 4d are installed so that a substantially rectangular parallelepiped space is partitioned and the projection screens are perpendicular to each other. The projector device 2 is hung down from the ceiling at substantially the center of the partitioned space. The projector device 2 is installed so that the image can be projected onto the projection screens 4a to 4d respectively installed on four sides.

Fig. 12B is a plan view illustrating a state where the image is projected onto the projection screen 4 from the projector device 2 in a front view of the projector device 2 viewed from the projection screen 4c toward the projection screen 4a. The projector device 2 projects the image onto not only the projection screens 4a to 4d but also a floor surface 9. That is, the projector device 2 projects the image onto five surfaces. A plurality of the projector devices 2 may be installed so as to respectively correspond to the projection screens 4a to 4d and the floor surface 9.

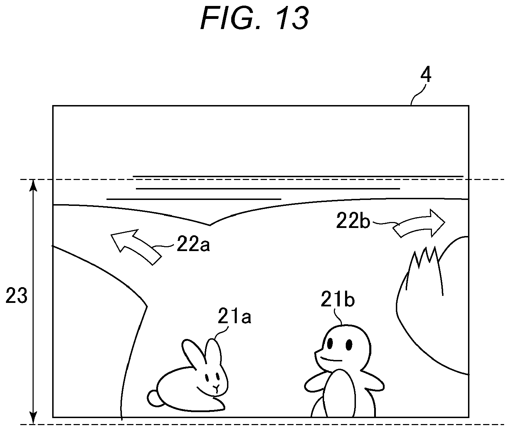

Next, content of the image projected from the projector device 2 will be described. Fig. 13 is a view illustrating an example of a program executing screen, which corresponds to at least one embodiment according to the present invention.

On the projection screen 4, at least an object 21 such as a character in the virtual world or a directional option 22 serving as an option for a traveling direction is displayed. The user gives an operation instruction by throwing a detection target object to a displayed object 21a, object 21b, directional option 22a or directional option 22b.

The invisible ray screen 5 may be installed, for example, in a range 23 having a height illustrated by a dotted line in the drawing.

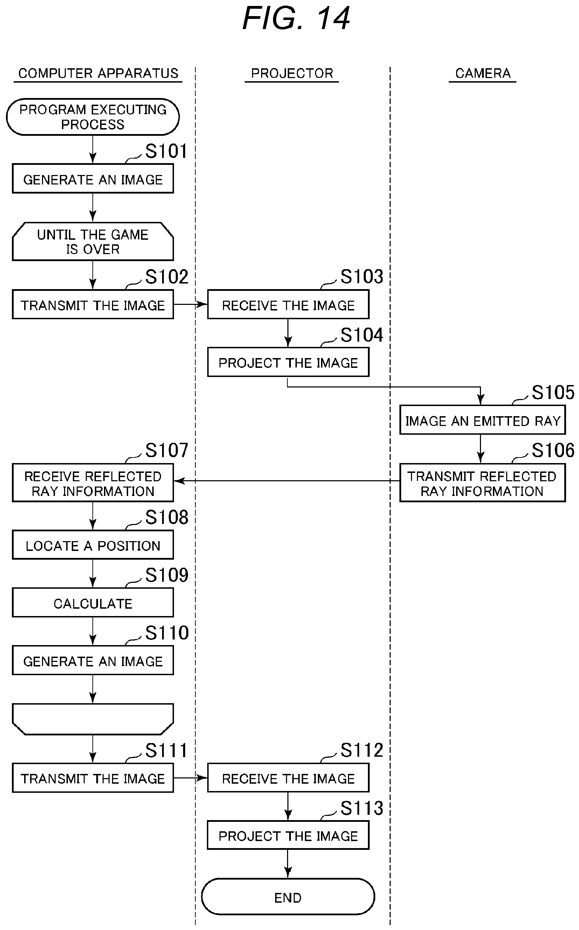

Next, a program executing process according to the fifth embodiment of the present invention will be described. Fig. 14 is a flowchart of a program executing process, which corresponds to at least one embodiment according to the present invention.

First, before the program is executed, the invisible ray screen 5 is installed in the vicinity of the projection screen 4.

Next, if the program is executed, the graphics processor 14 of the computer apparatus 1 generates the image to be projected from the projector device 2 (Step S101). Until the game is over, a process from Step S102 to Step S113 (to be described later) is repeatedly performed.

The image is transmitted to the projector device 2 via the communication interface 16 of the computer apparatus 1 (Step S102). Here, the communication network may be either wired or wireless. A classification of the network is not particularly limited. However, in order to quickly perform the process in the computer apparatus 1, it is preferable to use a facility capable of high-speed communication which is less likely to cause a time lag.

When the projector device 2 receives the image transmitted from the computer apparatus 1 in Step S102 (Step S103), the projector device 2 projects the image onto the projection screen 4 (Step S104).

If the user throws the detection target object such as the ball to the projected image, when the detection target object passes through the invisible ray screen 5, the emitted invisible ray is reflected on the detection target object. The camera 3 images the emitted ray (Step S105). In order to detect the reflected ray, the camera 3 images the invisible ray screen 5 at every predetermined time interval.

The camera 3 transmits information related to the reflected ray imaged in Step S105 (hereinafter, referred to as ray information) to the computer apparatus 1 (Step S106). The computer apparatus 1 receives the ray information transmitted from the camera 3 in Step S106 (Step S107), and starts to execute the program by using the ray information as operation input information.

Using the ray information as the operation input information, for example, is to design so as to determine that a predetermined input operation is performed in a case where a position of imaging the reflected ray is within a predetermined region of the projection screen 4.

The user according to the fifth embodiment of the present invention may be two or more persons. For example, in a case where the camera has not only a function to detect the invisible rays but also a function to detect colors, a color of the detection target object is identified. In this manner, it is possible to determine that any user instructs the input operation.

The computer apparatus 1 locates a position, based on the ray information received in Step S107 (Step S108). Furthermore, the computer apparatus 1 performs calculation processing, in accordance with the position located in Step S108 (Step S109).

The calculation processing will be described in detail. The computer apparatus 1 stores information at the storage unit 13 by associating the position on the invisible ray screen 5 which corresponds to the position of the object projected onto the projection screen 4 with the benefit given to the user.

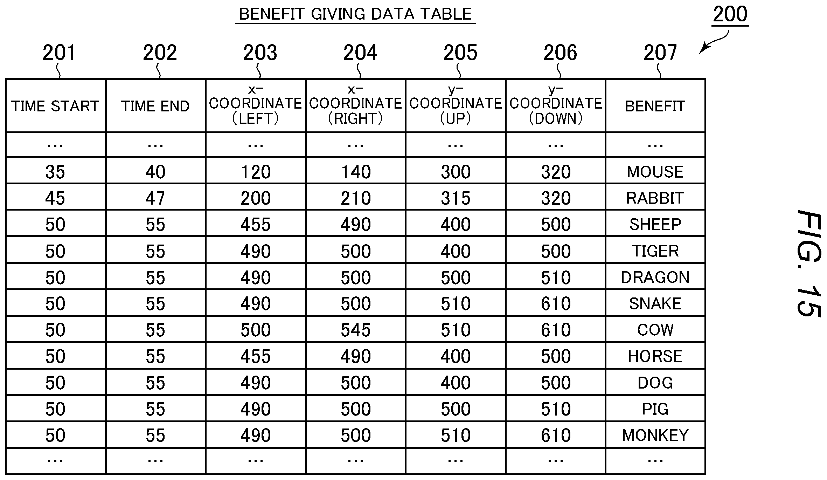

Fig. 15 is a view illustrating a benefit giving data table associated with the position of the object, which corresponds to at least one embodiment according to the present invention. A benefit giving data table 200 stores a benefit 207 by associating the benefit 207 with time start 201, time end 202, an x-coordinate (left) 203, an x-coordinate (right) 204, a y-coordinate (up) 205, and a y-coordinate (down) 206.

Each value indicated by the time start 201 and the time end 202 represents a time needed to locate the object displayed on the projected image. It is determined whether the elapsed time from when the program starts is included in a range from the value indicated by the time start 201 to the value indicated by the time end 202.

The x-coordinate (left) 203, the x-coordinate (right) 204, the y-coordinate (up) 205, and the y-coordinate (down) 206 respectively represent a position coordinate which can give the benefit. It is determined whether the position coordinate where the detection target object is detected is included inside a rectangle whose vertices are four points indicated by the x-coordinate (left) 203, the x-coordinate (right) 204, the y-coordinate (up) 205, and the y-coordinate (down) 206.

In a case where a detected time of the detection target object and a detected position coordinate satisfy conditions, the benefit 207 is determined from the benefit giving data table 200. For example, in a case where the elapsed time is "38" seconds, the x-coordinate is "130", and the y-coordinate is "315", the benefit to be given is a "mouse", and thus, the user can acquire the benefit of the mouse.

The benefit 207 may be a character or an item of the virtual world, a virtual currency, or additionally a building expressed by executing the program.

In the calculation processing performed in Step S109, the program is calculated by using the position located in Step S108 as the input data.

More specifically, in a case where the object such as the character is present at the located position, the case is treated as an attack against the object, and a dramatic effect may perform as if the object is damaged. In a case where a friendly character is present at the located position, an item may be used for the character. Alternatively, in a case where a directional option is present at the located position, a dramatic effect that scenes are switched therebetween may be achieved, on the assumption that the option is selected.

In addition, in accordance with the object present at the located position, a program may be used which appropriates a score. The score for each user may be stored in the storage unit 13, and a game result of the user may be displayed after a game is over.

Furthermore, in a case where an object is given as the benefit illustrated in Fig. 15, the calculation processing is performed so as to generate the image which can acquire the benefit. The image which can acquire the benefit includes such as a one-dimensional code or a two-dimensional code.

The image which acquires the benefit is captured by using a portable communication terminal device having an imaging function such as the camera. In this manner, information related to the object of the acquired benefit can be read in, and the information may be used for other applications.

As an example, as the information related to the object, it is assumed that the information is a form in which a computer apparatus refers to a sign such as a code by communicating with a server device having information registered in advance, and in which the content is downloaded. In addition, the content may be stored in a storage region of the portable communication terminal device having the imaging function.

Next, the image obtained in accordance with the result calculated by performing the calculation processing in Step S109 is generated in the graphics processor 14 (Step S110). Until it is determined that the game is over by the calculation processing in Step S109, the process from Step S102 to Step S110 is repeatedly performed.

The game described herein may be the whole program from the start to the end of the executed program, and for example, the game may be a part of the program, that is, only a battle scene of fighting against an enemy character.

If it is determined that the game is over, the computer apparatus 1 transmits the image generated in Step S110 to the projector device 2 via the communication interface 16 (Step S111).

The projector device 2 receives the image (Step S112), and projects the received image onto the projection screen 4 (Step S113), thereby completing the process.

In the above-described embodiment, the image is projected onto the projection screen 4 from the projector device 2. However, a configuration without using the projector device 2 can be adopted. For example, it is conceivable that the image to be displayed is output from the computer apparatus 1 by using a display instead of the projection screen 4.

In a case where the display is used instead of the projection screen 4, a visible ray screen can be used instead of the invisible ray screen 5. As an example, a screen may be used in which a light blue color is developed. In this case, considering that the display is viewed through the visible ray screen, the image can be displayed by adjusting coloring of the image to be displayed on the display. Without being limited to the blue color, the color of the visible ray screen may be any desired color.

An assumable game to which the fifth embodiment is applicable includes such as a game in which a plurality of players cooperatively participate or a single player game, for example. A type of the game includes a game in which the players compete for points by acquiring a monster, a role playing game (RPG), an escape game in which the player escapes from closed space, a racing game, or an action game and the like. In addition, a simulation program in which the player feels a live hall can be employed by using a live moving image of an artist.

According to an aspect of the fifth embodiment, the projection screen is installed so that a part of the image projected onto the projection screen is out of the angle of view of the camera. In this manner, the invisible ray screen is formed in the part of the projection screen, and an accurate position of the detection target object can be located.

According to an aspect of the fifth embodiment, the projection screen is disposed in the vicinity along the invisible ray screen. In this manner, it is possible to minimize a difference between a position where the detection target object hits against the projection screen and a position where the detection target object is detected.

According to an aspect of the fifth embodiment, the projection screen is installed so that a part of the image projected onto the projection screen is out of the angle of view of the camera. In this manner, for example, in a case where a child who has difficulties in throwing an article correctly plays a game, the invisible ray screen is installed in a region against which the detection target object is likely to hit, that is, only a low height region. Even if the detection target object hits against a high height region, the detection target object is not detected as the input data. In this manner, the game is managed by regarding the case as so-called extra decision.

According to an aspect of the fifth embodiment, in accordance with a position against which a user's thrown detection target object hits, an input operation is performed on the object within the virtual space. In this manner, the user can experience the virtual world with high realistic sensation. Accordingly, the user can feel much more interests.

According to an aspect of the fifth embodiment, a position of the reflected ray imaged by an imaging device is received as the input data. In this manner, if the imaging device is disposed in a place where the ray can be imaged, the fifth embodiment is applicable regardless of the place. Accordingly, the user can more easily experience the virtual world with high realistic sensation. Accordingly, the user can feel much more interests.

According to an aspect of the fifth embodiment, projection planes are installed on four sides so that one projection plane and the other projection plane are perpendicular to each other, that is, so as to surround the user. Furthermore, the image is also projected on the floor surface. In this manner, the user can experience the virtual world with high realistic sensation. Accordingly, the user can feel much more interests.

According to an aspect of the fifth embodiment, the given benefit is displayed as a code on the projection screen. In this manner, information usable for other systems can be linked by means of imaging. Accordingly, it is possible to easily achieve collaboration between different products or systems, and it is possible to ease strain on developers.

According to the fifth embodiment, the "invisible ray", the "invisible ray screen", the "projection screen", the "image", the "projector device", the "reflected light", the "camera", the "computer apparatus", the "detection target object", and the "angle of view" are respectively the same as the contents described in the first embodiment.

In the fifth embodiment, the "calculation" is the same as the content described in the second embodiment. In the fifth embodiment, the "benefit" is the same as the content described in the third embodiment.

In the fifth embodiment, for example, the "code" means a symbol string for delivering information, and can be decoded into uniform information. For example, the "virtual world" means a virtual space on a computer.

For example, the "character" means a player character existing as an alternative for a game player, or a sub-character subordinate to the player character, and includes an object which behaves together with the player character.

### Appendix

In describing the embodiments above, the following inventions are disclosed so as to be embodied by those who have ordinary knowledge in the field belonging to the inventions.
(1) A positioning program executed by a computer apparatus in a positioning system comprising: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; and the computer apparatus, wherein the projection screen is installed so that a part of the image projected onto the projection screen is outside angle of view of the camera, and the positioning program causes the computer apparatus to function as a locator that, in a case where a detection target object is caused to pass through the invisible ray screen, locate a passage position of the detection target object on the invisible ray screen, based on the reflected light of invisible rays detected by the camera.
(2) The positioning program according to (1), wherein the positioning program causes the computer apparatus to function as: a calculator that calculates a predetermined program by using the position located by the locator as input data; an image generator that generates an image in accordance with a calculation result calculated by the calculator; and a projector that causes a projector device to project the image generated by the image generator onto the projection screen.
(3) The positioning program according to (2), wherein the projector projects an object onto the projection screen, and the positioning program causes the computer apparatus to function as: a benefit storage that stores information by associating a position on the invisible ray screen which corresponds to a position of the object on the projection screen with a benefit to be given to a user; and a benefit giver that gives the benefit to the user in accordance with the position located by the locator.
(4) The location program according to (3), wherein the benefit given by the benefit giver is a projection of a readable code associated with the object projected at the position on the projection screen which corresponds to the position located by the locator onto the projection screen.
(5) The location program according to (1), wherein the camera detects the reflected light at every predetermined time interval, and the locator locates the passage position of the detection target object on the invisible ray screen at every predetermined time interval.
(6) The location program according to (2), wherein the positioning system includes a plurality of the projection screens installed so as to form a predetermined angle, and a plurality of the projector devices corresponding to the respective projection screens, and the projector causes each of the projector devices to project the image onto the corresponding projection screen.
(7) The non-transitory computer-readable recording medium according to (1), wherein invisible rays are infrared rays.
(8) A computer apparatus in a positioning system comprising: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; and the computer apparatus, wherein the projection screen is installed so that a part of the image projected onto the projection screen is outside angle of view of the camera, and the computer apparatus includes a locator that locates, in a case where a detection target object is caused to pass through the invisible ray screen, a passage position of the detection target object on the invisible ray screen, based on the reflected light of invisible rays detected by the camera.
(9) A positioning method executed by a computer apparatus in a positioning system comprising: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; and the computer apparatus, wherein the projection screen is installed so that a part of the image projected onto the projection screen is outside angle of view of the camera, and the positioning method includes a step of positioning, in a case where a detection target object is caused to pass through the invisible ray screen, a passage position of the detection target object on the invisible ray screen, based on the reflected light of invisible rays detected by the camera.
(10) A positioning system comprising: an invisible ray screen formed by invisible rays; a projection screen disposed in the vicinity of the invisible ray screen along the invisible ray screen; a projector device that projects an image onto the projection screen; a camera that detects reflected light of invisible rays by imaging the invisible ray screen; a computer apparatus; a projector that projects the image onto the projection screen; a reflected light detector that causes the camera to detect the reflected light of invisible rays in a case where the detection target object is caused to pass through the invisible ray screen; and a locator that locates a passage position of the detection target object on the invisible ray screen, based on the reflected light of the detected invisible rays, wherein the projection screen is installed so that a part of the image projected onto the projection screen by the projector is outside angle of view of the camera.
(11) A positioning method executed by a positioning system comprising: an invisible ray screen formed by invisible rays; a projection screen disposed in the vicinity of the invisible ray screen along the invisible ray screen; a projector device that projects an image onto the projection screen; a camera that detects reflected light of the invisible ray by imaging the invisible ray screen; and a computer apparatus, the positioning method including: a step of projecting the image onto the projection screen; a step of causing the camera to detect the reflected light of invisible rays in a case where the detection target object is caused to pass through the invisible ray screen; and a step of positioning a passage position of the detection target object on the invisible ray screen, based on the reflected light of the detected invisible rays, wherein the projection screen is installed so that a part of the image projected onto the projection screen by the projector is outside angle of view of the camera.

## Claims

1. A positioning program executed by a computer apparatus in a positioning system comprising:
an invisible ray screen formed by invisible rays;
a projection screen disposed in the vicinity of the invisible ray screen along the invisible ray screen;
a projector device that projects an image onto the projection screen;
a camera that detects reflected light of invisible rays by imaging the invisible ray screen; and
the computer apparatus,
wherein the projection screen is installed so that a part of the image projected onto the projection screen is outside angle of view of the camera, and
the positioning program causes the computer apparatus to function as a locator that, in a case where a detection target object is caused to pass through the invisible ray screen, locate a passage position of the detection target object on the invisible ray screen, based on the reflected light of invisible rays detected by the camera.

2. The positioning program according to claim 1,
wherein the positioning program causes the computer apparatus to function as:
a calculator that calculates a predetermined program by using the position located by the locator as input data;
an image generator that generates an image in accordance with a calculation result calculated by the calculator; and
a projector that causes a projector device to project the image generated by the image generator onto the projection screen.

3. The positioning program according to claim 2,
wherein the projector projects an object onto the projection screen, and
the positioning program causes the computer apparatus to function as:
a benefit storage that stores information by associating a position on the invisible ray screen which corresponds to a position of the object on the projection screen with a benefit to be given to a user; and
a benefit giver that gives the benefit to the user in accordance with the position located by the locator.

4. The location program according to claim 3,
wherein the benefit given by the benefit giver is a projection of a readable code associated with the object projected at the position on the projection screen which corresponds to the position located by the locator onto the projection screen.

5. The location program according to any one of claims 1 to 4,
wherein the camera detects the reflected light at every predetermined time interval, and
the locator locates the passage position of the detection target object on the invisible ray screen at every predetermined time interval.

6. The location program according to any one of claims 2 to 5,
wherein the positioning system comprises a plurality of the projection screens installed so as to form a predetermined angle, and a plurality of the projector devices corresponding to the respective projection screens, and
the projector causes each of the projector devices to project the image onto the corresponding projection screen.

7. The location program according to any one of claims 1 to 6,
wherein invisible rays are infrared rays.

8. A computer apparatus in a positioning system comprising:
an invisible ray screen formed by invisible rays;
a projection screen disposed in the vicinity of the invisible ray screen along the invisible ray screen;
a projector device that projects an image onto the projection screen;
a camera that detects reflected light of invisible rays by imaging the invisible ray screen; and
the computer apparatus,
wherein the projection screen is installed so that a part of the image projected onto the projection screen is outside angle of view of the camera, and
the computer apparatus comprises a locator that locates, in a case where a detection target object is caused to pass through the invisible ray screen, a passage position of the detection target object on the invisible ray screen, based on the reflected light of invisible rays detected by the camera.

9. A positioning method executed by a computer apparatus in a positioning system comprising:
an invisible ray screen formed by invisible rays;
a projection screen disposed in the vicinity of the invisible ray screen along the invisible ray screen;
a projector device that projects an image onto the projection screen;
a camera that detects reflected light of invisible rays by imaging the invisible ray screen; and
the computer apparatus,
wherein the projection screen is installed so that a part of the image projected onto the projection screen is outside angle of view of the camera, and
the positioning method comprises a step of positioning, in a case where a detection target object is caused to pass through the invisible ray screen, a passage position of the detection target object on the invisible ray screen, based on the reflected light of invisible rays detected by the camera.

10. A positioning system comprising:
an invisible ray screen formed by invisible rays;
a projection screen disposed in the vicinity of the invisible ray screen along the invisible ray screen;
a projector device that projects an image onto the projection screen;
a camera that detects reflected light of invisible rays by imaging the invisible ray screen;
a computer apparatus; a projector that projects the image onto the projection screen;
a reflected light detector that causes the camera to detect the reflected light of invisible rays in a case where the detection target object is caused to pass through the invisible ray screen; and
a locator that locates a passage position of the detection target object on the invisible ray screen, based on the reflected light of the detected invisible rays,
wherein the projection screen is installed so that a part of the image projected onto the projection screen by the projector is outside angle of view of the camera.

11. A positioning method executed by a positioning system comprising:
an invisible ray screen formed by invisible rays;
a projection screen disposed in the vicinity of the invisible ray screen along the invisible ray screen;
a projector device that projects an image onto the projection screen;
a camera that detects reflected light of the invisible ray by imaging the invisible ray screen;
and a computer apparatus,
the positioning method comprising:
a step of projecting the image onto the projection screen;
a step of causing the camera to detect the reflected light of invisible rays in a case where the detection target object is caused to pass through the invisible ray screen; and
a step of positioning a passage position of the detection target object on the invisible ray screen, based on the reflected light of the detected invisible rays,
wherein the projection screen is installed so that a part of the image projected onto the projection screen by the projector is outside angle of view of the camera.
